# EUROPÄISCHE PATENTANMELDUNG

(11) **EP 2 503 166 A1**
(43) Veröffentlichungstag der Anmeldung: **26.09.2012**
(21) Anmeldenummer: 12158887.5
(22) Anmeldetag: 09.03.2012
(51) Int. Cl.: F16C 19/49, F16C 33/58, F16C 41/00, B62D 1/16

(54) **Drehschwingungsdämpfende Lageranordnung für eine Welle**

(30) Priorität: 22.03.2011 DE 202011000642 U
(71) Anmelder: Rollax GmbH & Co. Kg, 32107 Bad Salzuflen (DE)
(72) Erfinder: Ellefredt, Alexander, Coventry, CV5 8PR (GB); Milto, Benjamin, 33334 Gütersloh (DE)
(74) Vertreter: TER MEER - STEINMEISTER & PARTNER GbR

(57) **Zusammenfassung**

Drehschwingungsdämpfende Lageranordnung für eine Welle (10), mit einem Radiallager (12), das einen auf der Welle sitzenden inneren Laufring (16), einen äußeren Laufring (18) und radial dazwischen angeordnete Wälzkörper (24) aufweist, und mit einem Axiallager (14), das einen mit der Welle (10) mitdrehbaren Laufring (30), einen relativ zur Welle (10) drehbaren Laufring (32) und einen zwischen diesen Laufringen (30, 32) angeordneten Käfig (34) aufweist, in dem rollenförmige Wälzkörper (36) so gelagert sind, dass ihre Achse schräg zur Umfangsrichtung der Laufringe (30, 32) verläuft, dadurch gekennzeichnet, dass einer (18) der Laufringe des Radiallagers (12) in einem Stück mit einem (32) der Laufringe des Axiallagers (14) ausgebildet ist.

## Beschreibung

Die Erfindung betrifft eine drehschwingungsdämpfende Lageranordnung für eine Welle, mit einem Radiallager, das einen auf der Welle sitzenden inneren Laufring, einen äußeren Laufring und radial dazwischen angeordnete Wälzkörper aufweist, und mit einem Axiallager, das einen mit der Welle mitdrehbaren Laufring, einen relativ zur Welle drehbaren Laufring und einen zwischen diesen Laufringen angeordneten Käfig aufweist, in dem rollenförmige Wälzkörper so gelagert sind, dass ihre Achse schräg zur Umfangsrichtung der Laufringe verläuft.

Aus der Praxis ist eine Lageranordnung dieser Art bekannt, die beispielsweise zur Lagerung einer Lenkwelle eines Kraftfahrzeugs dient. Die Wälzkörper des Axiallagers können aufgrund ihrer Schrägstellung nicht schlupffrei an den Laufringen abrollen, da die Abrollbewegung der Wälzkörper relativ zu den Laufringen auch eine Komponente in Radialrichtung dieser Laufringe aufweist. Wenn die beiden Laufringe relativ zueinander gedreht werden, erzeugen die Wälzkörper deshalb einen gewissen Reibungswiderstand. Dieser Reibungswiderstand lässt sich präzise kontrollieren, indem die axiale Kraft eingestellt wird, mit dem die beiden Laufringe des Axiallagers gegeneinander gedrückt werden. Der Reibungswiderstand lässt sich auf diese Weise so einstellen, dass einerseits die Lenkung nicht zu schwergängig wird, andererseits jedoch unerwünschte Drehschwingungen der Lenkwelle und des Lenkrads gedämpft werden können.

Aufgabe der Erfindung ist es, eine Lageranordnung dieser Art zu schaffen, die einen kompakten Aufbau aufweist und sich rationell herstellen lässt.

Diese Aufgabe wird dadurch gelöst, dass einer der Laufringe des Radiallagers in einem Stück mit einem der Laufringe des Axiallagers ausgebildet ist.

Durch diese Bauweise wird die Anzahl der Komponenten der Lageranordnung und die Anzahl der Arbeitsschritte bei ihrer Fertigung und Montage reduziert.

Vorteilhafte Ausgestaltungen und Weiterbildungen der Erfindung sind in den Unteransprüchen angegeben.

Je nach Ausführungsform kann entweder der stationäre (im Fall einer Kraftfahrzeuglenkung karosseriefeste) äußere Laufring des Radiallagers in einem Stück mit dem relativ zur Welle drehbaren Laufring des Axiallagers ausgebildet sein, oder es kann der innere Laufring des Radiallagers in einem Stück mit dem der Welle mitdrehbaren Laufring des Axiallagers ausgebildet sein.

In einer vorteilhaften Ausführungsform wird der relativ zur Welle drehbare Laufring des Axiallagers durch einen Flansch gebildet, der radial vom äußeren Laufring des Radiallagers abgewinkelt ist, vorzugsweise radial nach innen. Der mit der Welle mitdrehbare Laufring des Axiallagers kann dann weiter entfernt vom Radiallager angeordnet sein, so dass er durch eine auf der Welle sitzende und mit dieser mitdrehbare Spanneinrichtung beaufschlagt werden kann, mit der die axiale Kraft und damit das Reibmoment eingestellt wird.

Im folgenden wird ein Ausführungsbeispiel anhand der Zeichnung näher erläutert.

Es zeigen:
- Fig. 1: einen axialen Halbschnitt einer erfindungsgemäßen Lageranordnung; und
- Fig. 2: eine axiale Ansicht eines Wälzkörperkäfigs eines Axiallagers der Lageranordnung nach Fig. 1.

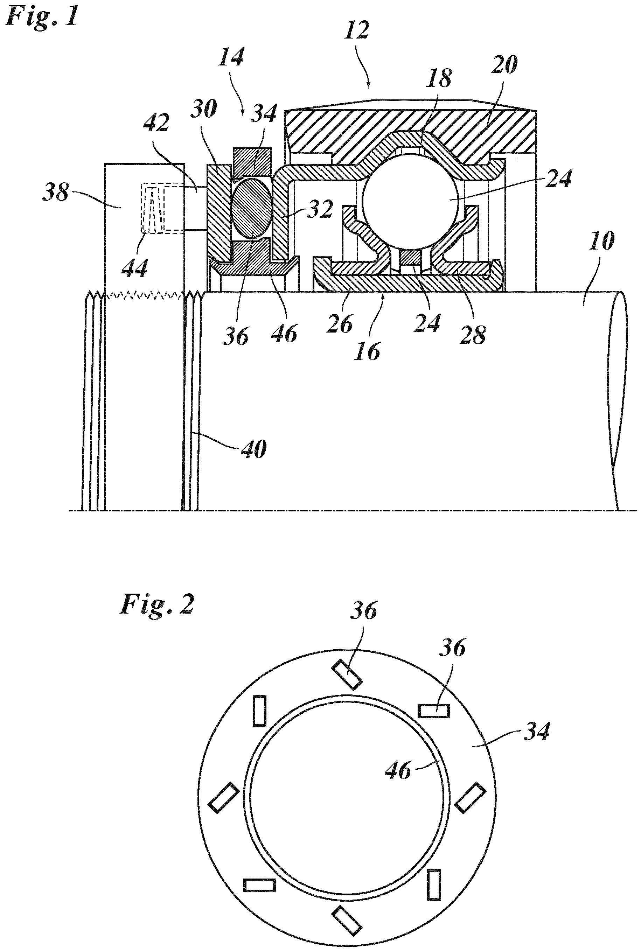

Die in Fig. 1 Lageranordnung dient zur drehbaren Lagerung einer Welle 10 in einem hier nicht gezeigten Gestell. Beispielsweise kann es sich bei der Welle 10 um die Lenkwelle eines Kraftfahrzeugs handeln, die in einem karosseriefesten Gestell gelagert ist. Die Lageranordnung umfasst ein Radiallager 12 und ein Axiallager 14.

Das Radiallager 12 weist einen inneren Laufring 16 auf, der im Presssitz fest auf der Umfangsfläche der Welle 10 gehalten ist und in radialem Abstand von einem äußeren Laufring 18 umgeben ist. Der äußere Laufring 18 ist stationär in einem gestellfesten Gehäuse 20 gehalten. Der innere Laufring 16 und der äußere Laufring 18 bilden jeweils eine rinnenförmig Laufbahn für Wälzkörper 22, im gezeigten Beispiel Kugeln, die in einem Käfig 24 gehalten sind.

Im gezeigten Beispiel ist der innere Laufring 16 dreiteilig aufgebaut. Er umfasst einen Basisring 26 mit einem flachen, U-förmigen Profil, der fest auf der Welle 10 sitzt, und zwei Profilringe 28 mit symmetrischen Profilen, die beiderseits des Käfigs 24 angeordnet und in dem Basisring 26 gehalten sind. Die beiden Profilringe 28 bilden zusammen die Laufbahn für die Wälzkörper 24.

Das Axiallager 14 weist einen mit der Welle 10 mitdrehbaren Laufring 30 und einen relativ zur Welle drehbaren Laufring 32 auf. Ein Käfig 34 ist zwischen den Laufringen 30 und 32 angeordnet und nimmt rollenförmige Wälzkörper 36 auf.

Der Käfig 34 und die Wälzkörper 36 sind in Fig. 2 in einer Stirnansicht gezeigt. Man erkennt, dass die Achsen der zylindrischen Wälzkörper 36 mit der Umfangsrichtung des Käfigs 34 und der Laufringe 30, 32 einen Winkel bilden. Im gezeigten Beispiel beträgt dieser Winkel 45°. In Fig. 1 ist einer der Wälzkörper 36 im Schnitt dargestellt. Aufgrund der Schrägstellung hat die Schnittfläche eine elliptische Form.

Der relativ zur Welle 10 drehbare Laufring 32 des Axiallagers 14 wird durch einen verlängerten und radial nach innen abgewinkelten Flansch an einem axialen Ende des äußeren Laufrings 18 des Radiallagers 12 gebildet. Somit sind der Laufring 18 des Radiallagers 12 und der Laufring 32 des Axiallagers 14 in einem Stück ausgebildet. Beispielsweise können diese Laufringe ebenso wie auch der Basisring 36 und die Profilringe 28 des inneren Laufrings 16 durch Stanzen und Rollen aus Stahlblech hergestellt werden. Durch die einstückige Ausbildung der Laufringe 18 und 32 wird die Herstellung und Montage beträchtlich vereinfacht.

Das Axiallager 14 dient dazu, den Reibungswiderstand, der der Drehung der Welle 10 entgegenwirkt kontrollierbar und einstellbar zu machen. Zu diesem Zweck ist im gezeigten Beispiel ein Stellring 38 vorgesehen, der auf einen Außengewindeabschnitt 40 der Welle 10 aufgeschraubt ist. Ein Reibring 42 ist drehbar am Stellring 38 gehalten und wird durch eine Federpackung 44 elastisch gegen den Laufring 30 des Axiallagers 14 vorgespannt. Auf diese Weise wird der Laufring 30 axial gegen den stationären Laufring 32 gedrückt. Die Wälzkörper 36 können aufgrund ihrer Schrägstellung nur mit Schlupf an den Laufringen 30 und 32 abrollen und üben deshalb auf den mit der Welle mitdrehbaren Laufring 30 einen Reibungswiderstand aus, der um so größer ist, je größer die axiale Kraft ist, mit der die Laufringe zusammengedrückt werden. Diese Kraft lässt sich einstellen, indem der Stellring 38 auf dem Gewindeabschnitt 40 verstellt wird. Der von dem Wälzkörper 36 erzeugte Reibungswiderstand wird über den Laufring 30, den Reibring 42 und den Stellring 38 auf die Welle 10 übertragen und trägt so zu dem Reibungswiderstand bei, den die Welle 10 bei ihrer Drehung im Radiallager 12 zu überwinden hat. Dieser Reibungswiderstand wird so eingestellt, dass einerseits die Welle 10 genügend leichtgängig drehbar ist, andererseits jedoch Drehschwingungen der welle wirksam gedämpft werden.

Der Käfig 34 des Axiallagers 14 ist aus Kunststoff hergestellt und hat im gezeigten Beispiel am inneren Umfangsrand Kröpfungen 46, die es erlauben, den Laufring 32, den Käfig 34 und den Laufring 30 miteinander zu verclipsen. Auch diese Clipsverbindung sorgt für einen gewissen Reibungswiderstand, der ebenfalls zur Dämpfung der Drehschwingungen der Welle 10 beiträgt.

Wie in Fig. 2 zu erkennen ist, sind die Wälzkörper 36 abwechselnd in entgegengesetzte Richtungen schräg zur Umfangsrichtung des Käfigs 34 angestellt. Dadurch wird erreicht, dass die Radialkomponenten der von den verschiedenen Wälzkörpern 36 übertragenen Reibungskräfte einander gegenseitig aufheben und somit in der Summe nicht zu einer radialen Kompression oder Aufweitung des Käfigs 34 führen.

Die Federpackung 44 übt in Axialrichtung wirkende Reaktionskräfte auf die Welle 10 aus. Gegen diese Kräfte wird die Welle 10 durch den fest aufgepressten Laufring 16 des Radiallagers 12 gesichert. Durch die Federpackung 44 wird so auch das Lagerspiel beseitigt. Wahlweise kann die Welle 10 auch einen axialen Anschlag für den Laufring 16 bilden.

## Patentansprüche

1. Drehschwingungsdämpfende Lageranordnung für eine Welle (10), mit einem Radiallager (12), das einen auf der Welle sitzenden inneren Laufring (16), einen äußeren Laufring (18) und radial dazwischen angeordnete Wälzkörper (24) aufweist, und mit einem Axiallager (14), das einen mit der Welle (10) mitdrehbaren Laufring (30), einen relativ zur Welle (10) drehbaren Laufring (32) und einen zwischen diesen Laufringen (30, 32) angeordneten Käfig (34) aufweist, in dem rollenförmige Wälzkörper (36) so gelagert sind, dass ihre Achse schräg zur Umfangsrichtung der Laufringe (30, 32) verläuft, **dadurch gekennzeichnet, dass** einer (18) der Laufringe des Radiallagers (12) in einem Stück mit einem (32) der Laufringe des Axiallagers (14) ausgebildet ist.

2. Lageranordnung nach Anspruch 1, bei der der äußere Laufring (18) des Radiallagers (12) in einem Stück mit dem relativ zur Welle (10) drehbaren Laufring (32) des Axiallagers (14) ausgebildet ist.

3. Lageranordnung nach Anspruch 2, bei der der relativ zur Welle (10) drehbare Laufring (32) des Axiallagers (14) durch einen verlängerten und radial abgewinkelten Flansch des äußeren Laufrings (18) des Radiallagers (12) gebildet wird.

4. Lageranordnung nach einem der vorstehenden Ansprüche, bei der die Laufringe (30, 32) des Axiallagers (14) durch den Käfig (34) dieses Axiallagers miteinander verclipst sind.

5. Lageranordnung nach einem der vorstehenden Ansprüche, bei der auf der Welle (10) eine Spanneinrichtung (38, 42, 44) angeordnet ist, mit der die Laufringe (30, 32) des Axiallagers (14) axial gegeneinander andrückbar sind.
